(19) Europäisches Patentamt

European Patent Office

Office européen des brevets

(11) Veröffentlichungsnummer: **0 315 148 B1**

(12) **EUROPÄISCHE PATENTSCHRIFT**

(45) Veröffentlichungstag der Patentschrift: **12.08.92**

(21) Anmeldenummer: **88118258.8**

(22) Anmeldetag: **02.11.88**

(51) Int. Cl.⁵: **B65D 81/38**, F16L 59/02

(54) **Isoliersystem für wärmegedämmte Behälter.**

(30) Priorität: **04.11.87 CH 4306/87**

(43) Veröffentlichungstag der Anmeldung:
**10.05.89 Patentblatt 89/19**

(45) Bekanntmachung des Hinweises auf die
Patenterteilung:
**12.08.92 Patentblatt 92/33**

(84) Benannte Vertragsstaaten:
**CH DE FR GB IT LI NL SE**

(56) Entgegenhaltungen:
EP-A- 0 030 930
FR-A- 2 237 116
FR-A- 2 513 223
US-A- 3 189 243
US-A- 3 560 293

(73) Patentinhaber: **LONZA AG**

**Gampel/Wallis(CH)**

(72) Erfinder: **Baumann, Hansjörg, Dipl.-Chem.**
**Bahnhofstrasse**
**Mühlau (Aargau)(CH)**
Erfinder: **Schill, Manfred**
**Mühlebergstrasse 66**
**Affoltern am Albis (Zürich)(CH)**

(74) Vertreter: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40(DE)**

Rank Xerox (UK) Business Services

## Beschreibung

Es ist bekannt, wärmegedämmte Behälter dermassen zu bauen, dass zwischen den Innenflächen der Aussenwand und Innenwand Isoliermaterial, meist geschäumtes Polyurethan, angebracht ist.
Es ist auch bekannt, die Behälterwände mit Hilfe von homogen geschäumtem Material gleicher Art und Dichte als Sandwichplatte auszubilden.

Der Nachteil dieser Konstruktionen ist, dass sie sehr beschädigungsanfällig sind, d.h. dass nach kurzem Gebrauch die im allgemeinen sprödharte Isolierschicht bricht oder zerfällt und dadurch die Isolierwirkung nachlässt.
Im Falle einer Sandwichplatte wird auch die mechanische Stabilität beeinträchtigt.

Aufgabe der Erfindung ist es, diese Nachteile zu beseitigen. Erfindungsgemäss wird dies durch ein Isoliersystem gemäss Patentanspruch 1 erreicht.

Die schock- und schlagabsorbierende Schicht aus weichelastischem, geschlossenzelligem Weichschaumstoff hat vorzugsweise eine Rohdichte von 30 bis 35 kg/m3. Das Kunststoffmaterial kann aus Polyurethan, PVC oder vorzugsweise aus Polyethylen bestehen.
Zweckmässig hat dieses Material eine niedrige Wärmeleitzahl von beispielsweise 0,03 bis 0,04 W/mk und ist daher auch gleichzeitig Bestandteil der Behälterisolation.

Diese schock- und schlagabsorbierende Schicht wird in einer Wandstärke von 15 bis 30 mm, vorzugsweise 20 bis 25 mm, angewendet.
Diese Schicht wird durch Verklebung, beispielsweise mit Hilfe eines Kontaktklebers, eines Selbstklebebandes oder durch Flächendruck, an die Innenfläche der Aussenwand des Behältnisses fixiert, wobei diese eben oder gewölbt sein kann.

Die Isolierschicht aus Hartschaumstoff weist eine Rohdichte von 30 bis 90 kg/m3, vorzugsweise 40 bis 50 kg/m3, auf. Diese wird in einer Dicke von 20 bis 80 mm, zweckmässig 30 bis 50 mm, angewendet.
Das Kunststoffmaterial dieser Schicht kann Polyurethan oder PVC sein; vorzugsweise wird Hart-PVC-Schaumstoff verwendet, der eine Wärmeleitzahl von 0,02 bis 0,04 W/mk aufweist.

Diese Isolierschicht ist auf der Behälterinnenseite mit einer Verstärkungsschicht versehen. Diese Verstärkungsschicht kann aus oberflächenbehandeltem oder rostfreiem Stahl, Aluminium oder anderen Metallegierungen, massivem Kunststoff in Form von Profilen, Platten und Folien oder auch leicht geschäumten, extrudierten Platten bestehen.

Die beschichtete Isolierschicht ist schwimmend auf der schock-und schlagabsorbierenden Schicht aufgebracht, d.h. sie ist an keiner Stelle mit der schock- und schlagabsorbierenden Schicht fest verbunden.

Das Isoliersystem vorliegender Erfindung wird beim Gebrauch wie beim Transport von Behältern oder bei der Handhabung der Behälter mittels Ladegeräten (Gabelstapler), Fördermitteln, Rollenbahnen, Hub- und Transportgeräten mechanisch nicht beeinträchtigt.
Auch Torsionskräfte beeinträchtigen die mechanischen und isolierenden Eigenschaften nicht.

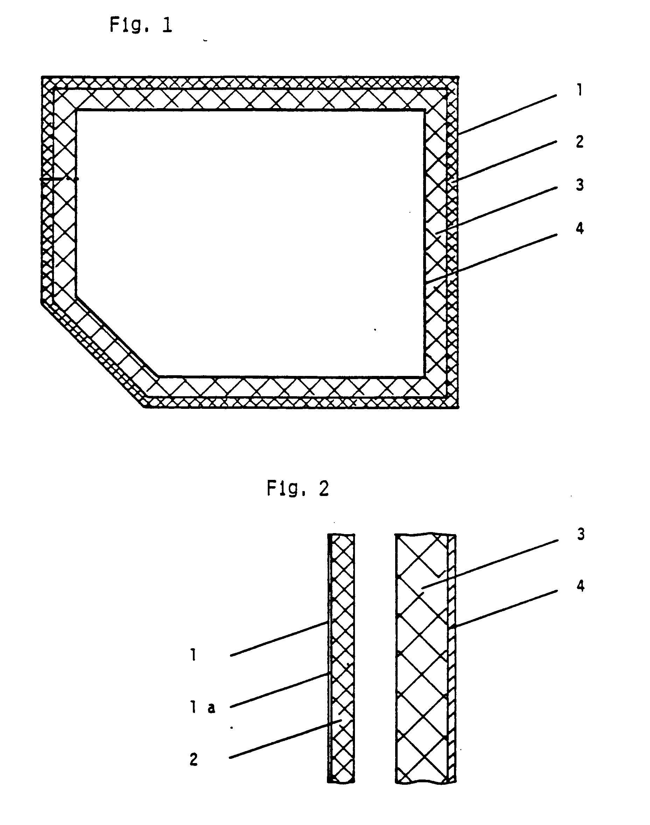

In Fig. 1 und 2 ist ein erfindungsgemässes Isoliersystem für einen wärmegedämmten Behälter dargestellt.
1 ist die Aussenwand, an die mittels einer Klebschicht 1a die schlagabsorbierende Schicht 2 eingebracht ist. 3 stellt die Isolierschicht dar, die an der Innenwand mit einer Verstärkungsschicht 4 versehen ist.

## Patentansprüche

1. Isoliersystem für wärmegedämmte Behälter, dadurch gekennzeichnet, dass auf die Innenfläche der Aussenwand des Behälters eine schock- und schlagabsorbierende Schicht (2) aus weichelastischem, geschlossenzelligem Weichschaumstoff mit einer Rohdichte von 25 bis 50 kg/m3 in einer Dicke von 15 bis 30 mm durch Verklebung oder Flächendruck angebracht ist, auf die eine Isolierschicht (3) aus Hartschaumstoff mit einer Rohdichte von 40 bis 90 kg/m3 in einer Stärke von 20 bis 80 mm, die einseitig nach innen eine Verstärkungsschicht (4) besitzt, schwimmend eingebracht ist.

## Claims

1. Insulating system for thermally insulated containers, characterized in that on the inner surface of the outside wall of the container a shock and impact absorbing layer (2) consisting of soft elastic soft foam having closed cells and a density of plastics of 25 to 50 kg/m$^3$ is applied in a thickness of 15 to 30 mm by adhesive joint or area pressure, onto which layer (2) an insulating layer (3) of rigid foam having a density of plastics of 40 to 90 kg/m$^3$ is applied in floating manner in a thickness of 20 to 80 mm, said layer (3) comprising a reinforcing layer (4) on the inner surface.

## Revendications

1. Système isolant pour récipient calorifugé, caractérisé en ce que sur la face intérieure de la paroi extérieure du récipient, il est prévu une couche absorbant les chocs et les impacts (2) en mousse souple élastique à cellule fermée ayant une densité brute de 25 à 50 kg/m$^3$ et une épaisseur de 15 à 30 mm, appliquée par collage ou pression de surface sur laquelle est appliquée de façon flottante une couche isolante (3) en mousse dure ayant une densité brute de 40 à 90 kg/m$^3$ d'une épaisseur de 20 à 80 mm qui possède une couche de renforcement (4) unilatéralement vers l'intérieur.

Fig. 1

Fig. 2